# EUROPEAN PATENT APPLICATION

(11) **EP 2 520 483 A1**
(43) Date of publication of application: **07.11.2012**
(21) Application number: 12386014.0
(22) Date of filing: 25.04.2012
(51) Int. Cl.: B62M 19/00

(54) **Hydraulic bicycle**

(30) Priority: 04.05.2011 GR 2011100268
(71) Applicant: Mastrokalos, Antonios, 84003 Sifnos (GR)
(72) Inventor: Mastrokalos, Antonios, 84003 Sifnos (GR)

(57) **Abstract**

The invention relates to a hydraulic bicycle, which comprises a pump (2) and a hydraulic oil engine (20) in order to facilitate a cyclist. The motion of the legs of a cyclist is transferred from the pedals (10) of the bicycle to the shaft of the pump (16) via the lever arms (6) and the turning pins (11), (12). When force is applied on the pedals (10), the intermediate part of the lever arm (9) with its rear part (5), via the turning pins (11), (12), and the intermediate part (9) with the connecting arm (13), via the fixation pins (14), (15), form a parallelepiped with continuously varying angles so that a small arc of displacement of the lever arm (6) and the intermediate part (9) is transformed to a large angular displacement of the rear part (5) thereof. The bicycle may have simultaneously 2 engines so that both wheels are supplied.

## Description

The present invention relates to a hydraulic bicycle, wherein motion is transmitted to one wheel or both wheels at the same time.

Until now, many efforts have been made to improve the bicycles and facilitate a cyclist during motion. These are mainly directed to improvements in the manufacture materials so that the weight of the bicycle framework is reduced, or to aiding a cyclist in various ways, such as by the parallel use of small petrol engines, fuel cell machines or hybrid electric engines that store energy in rechargeable batteries. Furthermore, speed systems or derailers have been used, or coupling of pairs of sprocket wheels having different gauges. No effort has been made to eliminate the crank arms, so that the rotational motion is not simply provided to the rear wheel of the bicycle.

In contrast, the present invention provides an alternative technique, instead of using a chain with a crank arm, the length of which would be limited to ca. 20 cm: In the present invention, a lever arm is used, which has a length always larger than the diameter of the wheel, wherein the length may also exceed 80 cm which is the length of the legs of human of average height. Thus, the cyclist will have to apply only the forces required to bear his weight. Furthermore, the cyclist's legs will not have to apply particular efforts to .execute the complex motion of pedaling, but simply a small-arc reciprocating oscillation. The torque obtained by such an arm is respectively much larger than that of the crank arms, thus no intense pedaling is required. As a result, the speed is also increased.

These and other features as well as advantages of the present invention will be apparent by the following detailed description. The invention will be better understood with reference to the accompanying figures which show an exemplary embodiment thereof.

Figure 1 a shows a perspective view of the motion system of the bicycle, as proposed by the present invention. It also shows the frame on which the motion system of the bicycle is supported and functions, whereas figure 1b presents a plan view of the said system.

Figures 2 and 3 show the positions of the lever arms as well as their paths, in relation to the connecting arms. Also, the pins of the respective arms which are connected to the shaft of the hydraulic supply pump are also shown, the pump supplying the engines of the front and rear wheels.

Referring to these figures, we will describe a preferred embodiment of the invention.

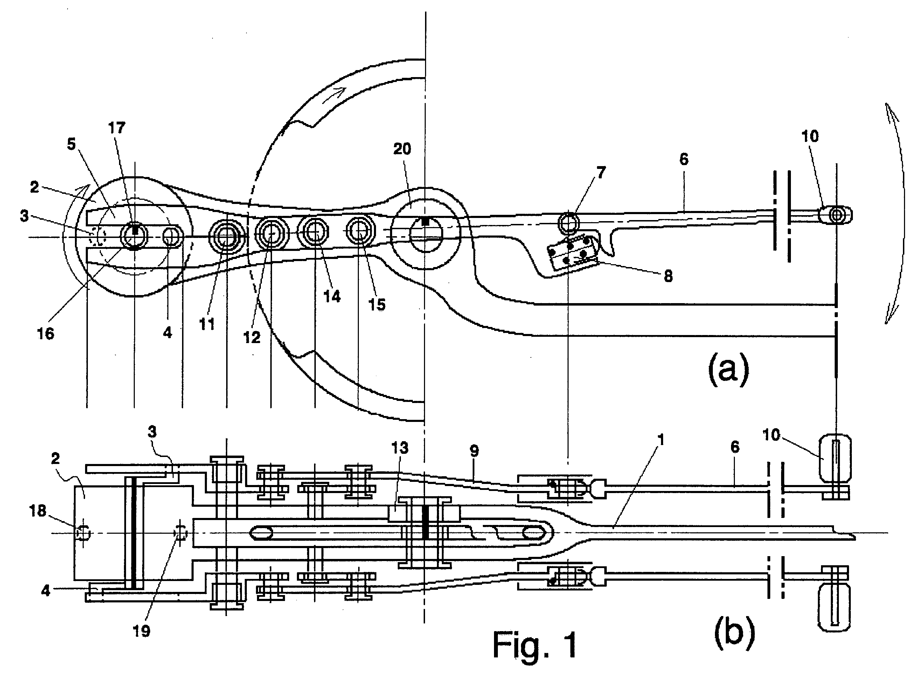

The bicycle comprises a motion system, wherein lever arms cooperate, on the front of which the force from the cyclist's legs is applied, whereas at the rear part, after the positions of the fixation pins, they have a rectangular opening or slit, through which the pins of the turning arms pass freely, which by the oscillation of the lever arms force the shaft of the supply pump to make a full rotation. The supply pump in turn supplies a corresponding rotational engine having a much lower efficiency than that of the pump, so that the revolutions of the engine are multiplied. The bicycle consists of a framework (1), figure 1b, on which a hydraulic pump (2), figure 1a, is positioned, which is connected via the fixation pins (3), (4) to the rear part (5) of the lever arm (6). The lever arm (6) constitutes one of the major elements of the motion transmission system of the bicycle, which marks the difference in relation to the bicycle transmission devices currently available in the market. The front part of the lever arm (6) is connected via an articulation having a pin (7) and a spring (8) to the intermediate part (9). The provision of the spring (8) contributes to the elastic, non-rigid, behavior of the whole lever arm (6) for the time when the cyclist applies force on the pedals (10) for motion. The intermediate part of the lever arm (9) is connected to the rear part (5) by the use of turning pins (11), (12), whereas the intermediate part (9) is also connected to the connecting arm (13) via the fixation pins (14), (15). In this manner, a parallelepiped shape having continually variable angle values is obtained, whereas pairwise the sides of the angles always remain parallel between them. Aim of the latter is that the small arc of displacement of the lever arm (6) and the intermediate part (9) is transformed to a large angular displacement of the rear part (5) thereof.

A small effective path for the pedaling of each leg is converted to as large angular oscillation of the rear part (5) as imposed by the fixation pins (3), (4), which undertake the full rotation around the shaft (16) of the pump. This rotation is ensured by a key (17) of the supply pump (2), which is also equipped with a ratchet gearing that prevents an undesired reverse rotation direction. The pump (2) comprises oil inlet and outlet holes (18), (19) towards the reserved tank, which at the same time is a closed-type expansion vessel, so that rapid filling of the aspiration chambers of the pump is feasible, and in particular without any danger of gas formation and entrapment. Exemplarily, it should be mentioned that the pump (2) may be of the double-chamber aspiration/force type, so that the produced moment constitutes a torque and the resistance against the cyclist's legs is smaller. Also, its capacity may be such that apart from the rear wheel it also supplies the front wheel. The oil always arrives at the hydraulic engine (20), no details of which are shown since its operation is known. Exemplarily, an engine of the double-chamber aspiration/force type will be suitable for the desired operation.

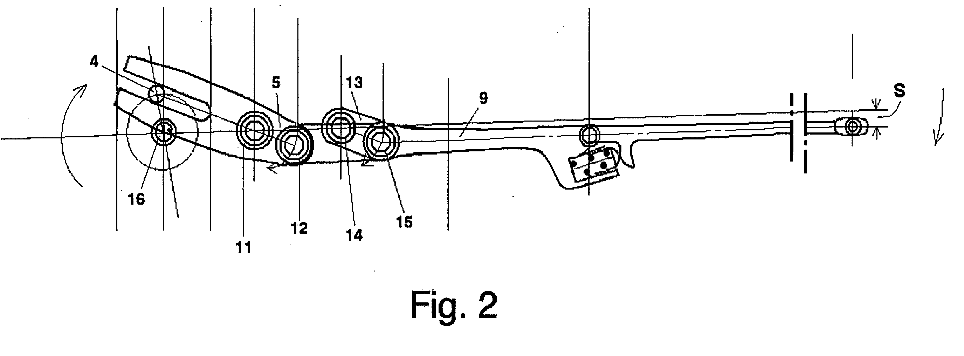

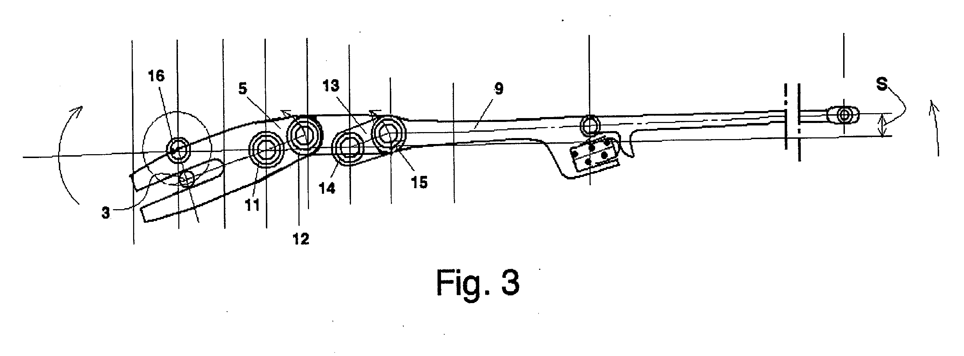

During motion, the intermediate part of the lever arm (9) is forced by the leg of the cyclist to describe a descending path (S), as shown by the respective arrow, figure 2, whereas a respective path will be described both by the connecting arm (13) and the rear part (5) of the lever arm, turning around the turning pins (11), (12) as well as the fixation pins (14), (15). In this way, the rear part (5) of the lever arm will describe a arc path as imposed by the radius of the fixation pin (4), entraining the shaft of the pump (16) to a half-circle motion. Respectively, the fixation pin (3) of the left side, figure 3, forces the connecting arm (13) and the rear part (5) of the lever arm to turn around the turning pins (11), (12) and the fixation pins (14), (15) to a reverse ascending path, as shown by the arrows, forcing the rear part (5) of the lever arm to describe a path (S), reverse to the previous one, so that force is applied by the cyclist's leg during the next time, thereby contributing to a continuous circular motion of the pump shaft (16) and thus to a continuous motion of the bicycle.

The advantage provided by the use of such a bicycle can be shown by the following example. The main requirement is that the transmission ratio of the pump (2) to the engine (20) is always sufficiently large so that by minimum pedaling on the lever arms (6) a sufficiently high speed is obtained. If the diameter of the wheel is 80 cm, and the speed ratio is 6, then with a full rotation of the pump shaft (16) the shaft of the engine will move 6 times. With 40 pedalings per minute, the bicycle with acquire a speed equal to 144 km/h. It should be noted that, in an alternative embodiment, the pump may supply a second hydraulic engine arranged on the front wheel for the motion thereof.

By the disclosed motion system, apart from bicycles, the wheels of other human-driven vehicles, such as wheelchairs, four-wheeled recreation vehicles, propellers of various sea sport vehicles may be also driven.

It should be noted that the description of the invention was made with reference to an exemplary, non-limiting embodiment. Any change or modification regarding the shape, size, dimensions, manufacture/assembly materials and components used, application fields, as long as not constituting a new inventive step and not contributing in the known state of the art, are considered encompassed in the scope of the present invention.

## Claims

1. A hydraulic bicycle **characterized in that** it consists of a framework (1) on which a hydraulic pump (2) is arranged which supplies a hydraulic engine (20), which in turn transfers motion to the rear part of the bicycle it comprises lever arms (6), wherein their intermediate part (9) is connected to the rear part (5) by means of turning pins (11), (12), whereas the intermediate part (9) is connected to the connecting arm (13) by means of fixation pins (14), (15), so that during their motion the displacement of the lever arm (6) and the intermediate part (9) is transformed to a large angular displacement of the rear part (5) thereof.

2. A hydraulic bicycle, according to claim 1, **characterized in that** the front part of the lever arm (6) is articulated by means of a pin (7) and a spring (8) to the intermediate part (9), so that the lever arm (6) during application of force on the pedals (10) exhibits an elastic, non-rigid, behaviour.

3. A hydraulic bicycle, according to claim 1, **characterized in that** the hydraulic pump (2) may simultaneously supply a second hydraulic engine, which transfers its motion to the front wheel of the bicycle.
